(19) Europäisches Patentamt
European Patent Office
Office européen des brevets

(11) **EP 4 086 869 B1**

(12) **EUROPÄISCHE PATENTSCHRIFT**

(45) Veröffentlichungstag und Bekanntmachung des Hinweises auf die Patenterteilung:
**16.10.2024   Patentblatt 2024/42**

(21) Anmeldenummer: **21172680.7**

(22) Anmeldetag: **07.05.2021**

(51) Internationale Patentklassifikation (IPC):
*G08B 13/16* (2006.01)    *G01N 29/04* (2006.01)
*G01N 29/12* (2006.01)    *G01N 29/42* (2006.01)
*G01N 29/44* (2006.01)    *G01N 29/50* (2006.01)
*H04R 29/00* (2006.01)

(52) Gemeinsame Patentklassifikation (CPC):
**G08B 13/1609; G01N 29/12; G01N 29/42; G01N 29/4436; G01N 29/50;** G01N 2291/0289; G01N 2291/105

(54) **VERFAHREN UND VORRICHTUNG ZUM DETEKTIEREN UND LOKALISIEREN EINER STÖRSTELLE EINES GEHÄUSES**

METHOD AND DEVICE FOR DETECTING AND LOCATING A DEFECT OF A HOUSING

PROCÉDÉ ET DISPOSITIF DE DÉTECTION ET DE LOCALISATION D'UN POINT DE DÉFAILLANCE D'UN LOGEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**09.11.2022   Patentblatt 2022/45**

(73) Patentinhaber: **MUSE Electronics GmbH 1090 Wien (AT)**

(72) Erfinder:
• **ZACH, Gerald 2120 Obersdorf (AT)**

• **RAINER, Max 1050 Wien (AT)**
• **KIRSCHNER, Markus 2340 Mödling (AT)**

(74) Vertreter: **Weiser & Voith Patentanwälte Partnerschaft Kopfgasse 7 1130 Wien (AT)**

(56) Entgegenhaltungen:
**WO-A2-2015/065873       US-A1- 2017 338 804 US-A1- 2020 003 646**

**Beschreibung**

Die vorliegende Erfindung betrifft Verfahren und Vorrichtungen zum Detektieren und Lokalisieren von Störstellen eines Gehäuses mittels Schallwellen.

Die Überwachung der Integrität von Gerätegehäusen ist für sicherheitskritische Anwendungen im behördlichen, industriellen oder militärischen Bereich, insbesondere bei elektronischen Geräten wie Servern, Computern, Laptops, Notebooks und Smartphones, als "First Line of Defense" gegenüber Hackerangriffen von strategischer Bedeutung. Manipulationen an einem Gehäuse, beispielsweise durch Aufbohren, das Einbringen von Fremdkörpern wie Sonden oder Transmittern oder das Zerstören von Siegeln im Gehäuseinneren, können ein untrügliches Zeichen für solche Hackerangriffe sein. Bei einer großen Zahl von zu überwachenden Gerätegehäusen, z.B. in Serverschränken oder im Feld, oder wenn von außen nicht erkennbar, bleiben solche physischen Manipulationen jedoch häufig unentdeckt. Auch Beschädigungen beim Einsatz im Feld, die beispielsweise zu undichten Stellen führen, bleiben häufig verborgen.

Zur Integritätsüberwachung von Strukturen ist die Verwendung von Schallwellen in Form von Körperschall oder Luftschall bekannt. Beispielsweise wird in der US 2017/0338804 A1 beschrieben, mehrere Lautsprecher/Mikrofon-Paare über einen zu überwachenden Innenraum zu verteilen. Die Luftschall-Übertragungsstrecke jedes Lautsprecher/Mikrofonpaares wird in einer angeschlossenen Auswerteschaltung als adaptives Digitalfilter nachgebildet. Wenn sich das adaptive Digitalfilter gegenüber einem Ausgangszustand zu stark ändert, wird eine Störung des Innenraums detektiert und als in der Nähe des betroffenen Lautsprechers/Mikrofon-Paares liegend lokalisiert.

Die bekannten akustischen Störstellen-Detektionsverfahren sind jedoch nicht in der Lage, die detektierten Störstellen genauer und zuverlässig zu lokalisieren, sodass sie rasch aufgefunden werden können.

Die Erfindung setzt sich zum Ziel, Störstellen-Detektionsverfahren und -vorrichtungen zu schaffen, die in der Lage sind, die detektierten Störstellen zuverlässig zu lokalisieren.

Dieses Ziel wird in einem ersten Aspekt mit einem Verfahren zum Detektieren und Lokalisieren einer Störstelle eines Gehäuses erreicht, insbesondere für ein elektronisches Gerät, umfassend:

Anordnen von zumindest zwei Lautsprechern und zumindest zwei Mikrophonen im Innenraum des Gehäuses;
für jede mögliche Paarung aus Lautsprecher und Mikrophon: Messen eines Referenz-Frequenzgangs der Schallübertragung vom Lautsprecher zum Mikrophon dieser Paarung;
zu einem späteren Zeitpunkt, für jede Paarung: Messen eines aktuellen Frequenzgangs der Schallübertragung vom Lautsprecher zum Mikrophon dieser Paarung;
für jede Paarung: Ermitteln eines Differenz-Frequenzgangs als Differenz zwischen dem aktuellen Frequenzgang dieser Paarung und dem Referenz-Frequenzgang dieser Paarung;
für zumindest eine Paarung: Ermitteln eines Detektionsmaßes des Differenz-Frequenzgangs dieser Paarung und, wenn dieses zumindest eine Detektionsmaß ein vorgegebenes Detektionskriterium erfüllt:

Detektieren einer Störstelle,
für jede mögliche Kombination zweier Paarungen: Berechnen eines Korrelationsmaßes zwischen den Differenz-Frequenzgängen der Paarungen dieser Kombination,
Ermitteln der Kombination mit dem höchsten Korrelationsmaß und, wenn in den zwei Paarungen dieser Kombination derselbe Lautsprecher oder dasselbe Mikrophon vorkommt, Lokalisieren der Störstelle als diesem Lautsprecher bzw. Mikrophon näher als jedem anderen Lautsprecher bzw. Mikrophon.

Das erfindungsgemäße Verfahren erlaubt eine zuverlässige Lokalisierung einer Störstelle auf den Umgebungsbereich eines der Lautsprecher oder Mikrophone. Wenn eine entsprechend hohe Zahl an Lautsprechern bzw. Mikrophonen weitgehend gleichmäßig über den Innenraum des Gehäuses verteilt wird, kann eine entsprechend hohe Ortsauflösung der Lokalisierung erzielt werden.

Als Korrelationsmaß für das Übereinstimmen zweier Differenz-Frequenzgänge kann jedes beliebige Korrelationsmaß verwendet werden, beispielsweise eine Summe der (frequenzweisen) absoluten oder quadrierten Differenzen oder eine L1-, L2- oder Lp-Norm der Differenzen zwischen den beiden jeweils betrachteten Differenz-Frequenzgängen, ein Skalarprodukt dieser Differenz-Frequenzgänge usw. Bevorzugt wird das Korrelationsmaß aus einer Kreuzkorrelation der Differenz-Frequenzgänge in einem ausgewählten Frequenzband ermittelt, was eine sichere Lokalisierung erlaubt. Besonders günstig ist es, wenn das Frequenzband 250 Hz bis 2 kHz ist, bevorzugt 350 Hz bis 1,1 kHz. Die Auswertung in diesen Frequenzbändern hat sich als ein besonders zuverlässiges Lokalisierungskriterium erwiesen.

In einer weiteren bevorzugten Ausführungsform der Erfindung werden beim Ermitteln der Kombination mit dem höchsten Korrelationsmaß nur jene Kombinationen berücksichtigt, die einen Korrelationsschwellwert überschreiten. Damit kann die Zuverlässigkeit der Lokalisierung weiter erhöht werden.

Als Detektionskriterium für die Detektion einer Störstelle könnte beispielsweise die Maximalamplitude der Differenz-Frequenzgänge aller Paarungen, wenn diese einen Schwellwert übersteigt, verwendet werden. Bevorzugt ist das Detektionskriterium erfüllt, wenn die gesamte Signalenergie zumindest eines Differenz-Frequenzgangs einen Detektionsschwellwert übersteigt.

Der Referenz-Frequenzgang und der aktuelle Frequenzgang der Schallübertragung zwischen Lautsprecher und Mikrophon einer Paarung können auf verschiedenste Arten gemessen werden. In einer ersten Ausführungsform der Erfindung wird der jeweilige Frequenzgang mittels von den Lautsprechern ausgestrahlter Chirps gemessen. In einer zweiten Ausführungsform kann der jeweilige Frequenzgang mittels von den Lautsprechern Dirac-Impulse gemessen werden. Die Messung mittels Chirps dauert etwas länger, führt jedoch zu genaueren Ergebnissen und die vom Mikrophon empfangene und über der Zeit aufgezeichnete Schallleistung gibt direkt den Frequenzgang wieder, wenn der Chirp - z.B. linear oder logarithmisch - über die Frequenz durchgestimmt wird. Die Messung mittels Dirac-Impulsen geht schneller, benötigt aber eine anschließende Fouriertransformation zur Berechnung des Frequenzgangs aus der vom Mikrophon über der Zeit aufgezeichneten Impulsantwort.

In jeder der genannten Ausführungsformen kann die Zuverlässigkeit der Lokalisierungen noch weiter erhöht werden, wenn die Referenz-Frequenzgänge und aktuellen Frequenzgänge jeweils über mehrere Einzelmessungen gemittelt werden, beispielsweise über zwei oder mehr unmittelbar aufeinanderfolgende Einzelmessungen.

In einem zweiten Aspekt schafft die Erfindung eine Vorrichtung zum Detektieren und Lokalisieren einer Störstelle eines Gehäuses, insbesondere für ein elektronisches Gerät, umfassend:

> zumindest zwei Lautsprecher und zumindest zwei Mikrophone zur Anordnung im Innenraum des Gehäuses; und einen an die Lautsprecher angeschlossenen Signalgenerator und eine an die Mikrophone angeschlossene Auswerteschaltung;
> wobei die Auswerteschaltung dafür ausgebildet ist,
> für jede mögliche Paarung aus Lautsprecher und Mikrophon einen Referenz-Frequenzgang der Schallübertragung vom Lautsprecher zum Mikrophon dieser Paarung zu messen,
> zu einem späteren Zeitpunkt, für jede Paarung: einen aktuellen Frequenzgang der Schallübertragung vom Lautsprecher zum Mikrophon dieser Paarung zu messen,
> für jede Paarung: einen Differenz-Frequenzgang als Differenz zwischen dem aktuellen Frequenzgang dieser Paarung und dem Referenz-Frequenzgang dieser Paarung zu ermitteln,
> für zumindest eine Paarung: ein Detektionsmaß des Differenz-Frequenzgangs dieser Paarung zu ermitteln und, wenn dieses zumindest eine Detektionsmaß ein vorgegebenes Detektionskriterium erfüllt:

> > eine Störstelle zu detektieren und
> > für jede mögliche Kombination zweier Paarungen: ein Korrelationsmaß zwischen den Differenz-Frequenzgängen dieser Kombination zu berechnen, und dann
> > die Kombination mit dem höchsten Korrelationsmaß zu ermitteln und, wenn in den zwei Paarungen dieser Kombination derselbe Lautsprecher oder dasselbe Mikrophon vorkommt, die Störstelle als diesem Lautsprecher bzw. Mikrophon näher als jedem anderen Lautsprecher bzw. Mikrophon zu lokalisieren.

Bezüglich der Vorteile und bevorzugter Ausgestaltungen der erfindungsgemäßen Vorrichtung wird auf die obigen Ausführungen zu dem von der Vorrichtung ausgeführten Verfahren verwiesen.

Die Erfindung wird nachstehend anhand von in den beigeschlossenen Zeichnungen dargestellten Ausführungsbeispielen näher erläutert. In den Zeichnungen zeigen:

> Fig. 1 ein Blockschaltbild der in einem zu überwachenden Gerätegehäuse eingebauten Vorrichtung der Erfindung zur Durchführung des Verfahrens der Erfindung;
> Fig. 2 ein Flussdiagramm des Verfahrens der Erfindung;
> Fig. 3 ein Beispiel eines Referenz-Frequenzgangs und eines aktuellen Frequenzgangs in einem Amplituden/Frequenz-Diagramm;
> Fig. 4 ein Beispiel eines Differenz-Frequenzgangs für ein Gehäuse ohne Störstelle in einem Amplituden/Frequenz-Diagramm;
> Fig. 5 ein Beispiel eines Differenz-Frequenzgangs für ein Gehäuse mit Störstelle in einem Amplituden/Frequenz-Diagramm;
> Fig. 6 ein Beispiel für Korrelationsmaße von Differenz-Frequenzgängen aus sechs möglichen Kombinationen von vier möglichen Paaren von Lautsprechern und Mikrophonen bei einer Vorrichtung der Erfindung mit zwei Lautsprechern und zwei Mikrophonen.

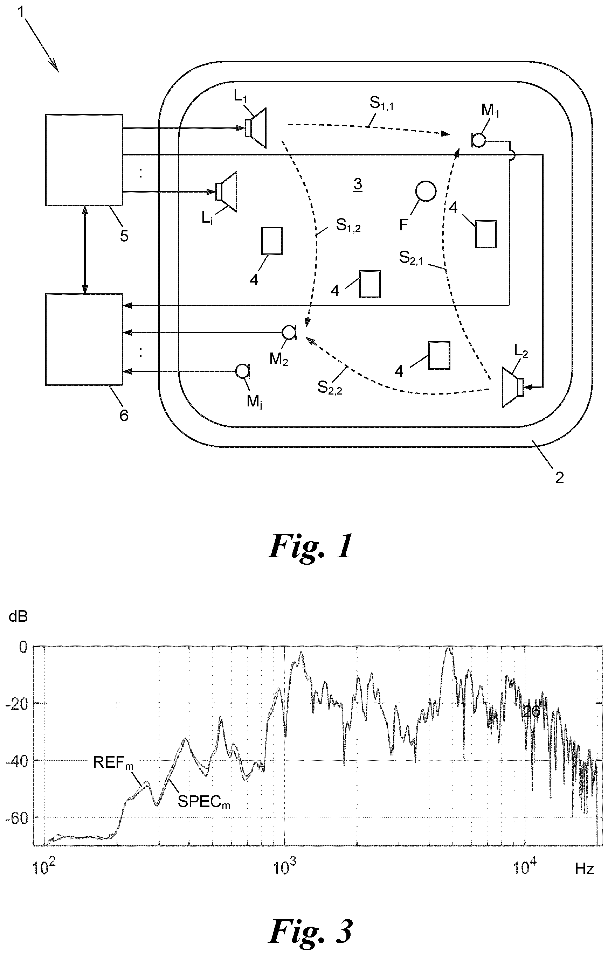

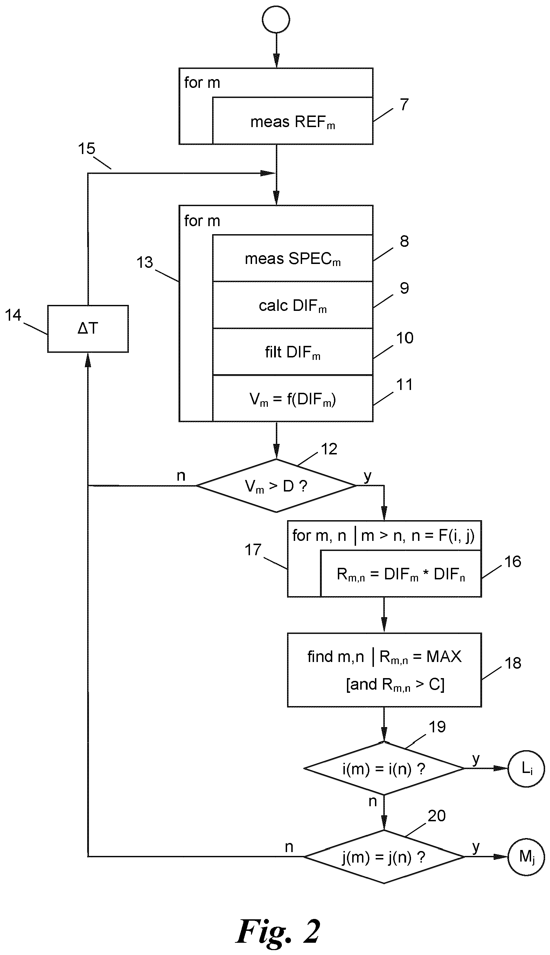

Fig. 1 zeigt eine Vorrichtung 1, die gleichzeitig zur Durchführung des in Fig. 2 gezeigten Verfahrens geeignet ist. Die Vorrichtung 1 dient zur Integritätsüberwachung eines Gehäuses 2, um daran Störstellen F zu detektieren und zu klassifizieren.

Das Gehäuse 2 hat einen Innenraum 3 zur Aufnahme technischer Komponenten 4. Beispielsweise ist das Gehäuse 2 das Gehäuse eines Computers, Servers, Notebooks, Laptops, Smartphones od.dgl. Das Gehäuse 2 ist nicht notwendigerweise geschlossen. Der Innenraum 3 ist mit einem Gas zur Schallausbreitung darin gefüllt, zumeist einfach mit Umgebungsluft, das bzw. die entweder voreingefüllt ist oder durch Öffnungen des Gehäuses 2 in den Innenraum 3 eindringt.

Bei den Störstellen F, auf die das Gehäuse 2 überwacht werden soll, kann es sich entweder um Fehlstellen handeln, also Stellen, an denen etwas im oder am Gehäuse 2 "fehlt", wie ein Loch, ein Riss oder Sprung in der Wand des Gehäuses 2, eine aus dem Gehäuse 2 entnommene technische Komponente 4, ein entferntes oder gebrochenes Siegel od.dgl. Oder die Störstelle F ist ein Fremdkörper, also etwas Zusätzliches im Gehäuse 2, beispielsweise eine Sonde, ein Anzapf-Kabel ("tap wire"), ein Transmitter od.dgl. Wenn eine Komponente 4 ihre Position im Gehäuse verändert, z.B. aufgrund eines Stoßes lose wird und sich verlagert, dann entsteht an ihrem ursprünglichen Ort eine Fehlstelle und sie bildet an ihrem neuen Ort einen Fremdkörper.

Zur Detektion und Lokalisierung von Störstellen F umfasst die Vorrichtung 1 zwei oder mehr im Innenraum 3 des Gehäuses 2 angeordnete Lautsprecher $L_i$ (i = 1, 2, ..., I) und - von diesen beabstandet - zwei oder mehr Mikrophone $M_j$ (j = 1, 2, ..., J). Es ist günstig, die Lautsprecher $L_i$ und insbesondere die Mikrophone $M_j$ möglichst gleichmäßig über den Innenraum 3 zu verteilen, da die Lokalisierung einer Störstelle F später in der Ortsauflösung der jeweiligen Umgebungsbereiche der Mikrophone $M_j$ erfolgt. Die Anzahl I an Lautsprechern $L_i$ und die Anzahl J an Mikrophonen $M_j$ braucht nicht notwendigerweise gleich zu sein.

Für jede mögliche Paarung (i, j) aus einem Lautsprecher $L_i$ und einem Mikrophon $M_j$ kann zwischen diesen eine Schallübertragung $S_{i,j}$ erfolgen. Die Schallübertragung $S_{i,j}$ ("akustische Übertragungsstrecke") umfasst sowohl den Direktschall vom Lautsprecher $L_i$ zum Mikrophon $M_j$ als auch jegliche Form von indirektem Schall, der durch Reflexionen an den Innenwänden des Gehäuses 2 bzw. an Komponenten 4 im Innenraum 3 des Gehäuses 2 vom jeweiligen Lautsprecher $L_i$ zum jeweiligen Mikrophon $M_j$ der Paarung (i, j) gelangt. Um möglichst viel an indirektem Schall zu erfassen und damit den Innenraum 3 weiträumig abzudecken, können die Lautsprecher $L_i$ und/oder Mikrophone $M_j$ omnidirektional sein oder entsprechend breite Richtcharakteristiken haben.

Jeder Lautsprecher $L_i$ ist an den Ausgang eines Signalgenerators 5 und jedes Mikrophon $M_j$ an den Eingang einer Auswerteschaltung 6 angeschlossen. Der Signalgenerator 5 und die Auswerteschaltung 6 können zwecks Synchronisation miteinander kommunizieren. Der Signalgenerator 5 kann zusammen mit der Auswerteschaltung 6 beispielsweise als Mikroprozessor realisiert oder auf einem solchen softwaretechnisch implementiert sein. Auch können der Signalgenerator 5 und die Auswerteschaltung 6 von bereits vorhandenen technischen Komponenten 4 des Geräts im Gehäuse 2 realisiert sein.

Unter Bezugnahme auf Fig. 2 wird mithilfe der Vorrichtung 1 in einem ersten Schritt 7 an einem "gesunden", d.h. nicht-manipulierten Gehäuse 2 ohne Störstellen F für jede mögliche Paarung (i, j) eines Lautsprechers $L_i$ und eines Mikrophons $M_j$ ein Referenz-Frequenzgang $REF_{i,j}$ der Schallübertragung $S_{i,j}$ zwischen diesem Lautsprecher $L_i$ und Mikrophon $M_j$ gemessen. Einfachheitshalber wird im weiteren die Menge $\{(i, j)\}$ aller möglichen Paarungen (i, j) mit dem Index m (m = 1, 2, ..., M) durchnummeriert, d.h. es wird eine Abbildungsfunktion $\Phi$ zwischen den Paarungen (i, j) und den Indizes m = $\Phi$ (i, j) gewählt. An sich kann die Abbildungsfunktion $\Phi$ beliebig gewählt werden, solange sie eindeutig und bijektiv ist. Beispiele für die Abbildungsfunktion $\Phi$ sind m = i · (J - 1) + j oder m = i + j · (I - 1).

Beispielsweise gibt es im Falle von zwei Lautsprechern $L_1$, $L_2$ und zwei Mikrophonen $M_1$, $M_2$ vier mögliche Paarungen (i, j), u.zw. (1, 1), (2, 1), (1, 2), (2, 2), und diese werden mit den Indizes m = 1, 2, 3, 4 z.B. wie folgt durchnummeriert:

Tab. 1

| Paarung m | (i, j) |
|---|---|
| 1 | (1, 1) |
| 2 | (2, 1) |
| 3 | (1, 2) |
| 4 | (2, 2) |

Der Referenz-Frequenzgang $REF_{i,j}$ einer Paarung (i, j) mit dem Index m wird daher im weiteren als $REF_m$ bezeichnet werden, siehe Fig. 3.

Für die Messung des Referenz-Frequenzgangs $REF_m$ der Schallübertragung $S_{i,j}$ gibt es mehrere Möglichkeiten. Einerseits kann der Signalgenerator 5 einen Chirp erzeugen, der vom jeweiligen Lautsprecher $L_i$ abgestrahlt wird, also ein monofrequentes Signal, dessen Frequenz über den zu vermessenden Frequenzbereich über die Zeit durchgestimmt wird. Die vom jeweiligen Mikrophon $M_j$ aufgenommene Schallamplitude bzw. -leistung wird über der Zeit aufgezeichnet und gibt unmittelbar den Referenz-Frequenzgang $REF_m$ über der Frequenz wieder. Oder der Signalgenerator 5 erzeugt einen Dirac-Impuls, welchen der jeweilige Lautsprecher $L_i$ abstrahlt, und die vom jeweiligen Mikrophon $M_j$ über der Zeit aufgezeichnete Impulsantwort wird anschließend fouriertransformiert, um so den Referenz-Frequenzgang $REF_m$ über der Frequenz zu ermitteln. Das ausgestrahlte Signal könnte auch ein codiertes Signal sein, z.B. wird es nochmals mit einem höherfrequenten Signal (z.B. 40 kHz) "zerhackt" und so zu einem Pseudo-Rauschsignal. Die gemessenen Referenz-Frequenzgänge $REF_m$ werden für die spätere Störstellenüberwachung gespeichert, beispielsweise in einem Speicher der Auswerteeinheit 6.

Die Referenz-Frequenzgänge $REF_m$ werden beispielsweise jeweils im hörbaren akustischen Frequenzbereich von 20 Hz - 20 KHz ermittelt, können aber auch - alternativ oder zusätzlich - den Infraschallbereich unterhalb von 20 Hz oder den Ultraschallbereich über 20 KHz, z.B. bis zu 100 KHz oder 200 KHz, umfassen. Die Wahl des Frequenzbereichs wird u.a. bestimmt durch die Gehäusedimensionen am unteren Ende und die Größe noch detektierbarer Störstellen am oberen Ende.

Es versteht sich, dass in Schritt 7 die Referenz-Frequenzgänge $REF_m$ jeweils einer nach dem anderen gemessen werden, um die Schallübertragungsstrecken $S_{i,j}$ akustisch sauber getrennt voneinander vermessen zu können.

Optional kann jeder Referenz-Frequenzgang $REF_m$ aus mehreren Einzelmessungen, d.h. mittels mehrerer aufeinanderfolgender Chirps oder Dirac-Impulse, gemittelt werden. Auch ist es möglich, jeden Referenz-Frequenzgang $REF_m$ vor seiner weiteren Verwendung zu filtern und/oder zu gewichten, beispielsweise zum Ausfiltern von Trittschall unterhalb von z.B. 200 Hz, zum Glätten von Messwertausreißern oder Notches, oder zum Ausfiltern von Frequenzbereichen, in denen das Empfangssignal eines Mikrophons $M_j$ ein für sinnvolle Auswertungen zu geringes Signal/Rausch-Verhältnis liefert.

Um das Auftreten einer Störstelle F zu detektieren und diese dann zu lokalisieren, wird zu einem beliebigen späteren Zeitpunkt in einem Schritt 8 für jede Paarung (i, j) bzw. $m = \Phi(i, j)$ ein aktueller Frequenzgang $SPEC_m$ (Fig. 3) der Schallübertragung $S_{i,j}$ zwischen dem jeweiligen Lautsprecher $L_i$ und dem jeweiligen Mikrophon $M_j$ gemessen. Im Messschritt 8 wird dasselbe Messverfahren angewandt, das für die Messung der Referenz-Frequenzgänge $REF_m$ im Schritt 7 verwendet worden ist, um die aktuellen Frequenzgänge $SPEC_m$ mit den Referenz-Frequenzgängen $REF_m$ vergleichbar zu machen.

Bei der Messung 8 der aktuellen Frequenzgänge $SPEC_m$ können (optionale) Mittelungen über mehrere Einzelmessungen oder (optionale) Filterungen, Gewichtungen bzw. Glättungen entfallen, um Rechenzeit zu sparen.

Die aktuellen Frequenzgänge $SPEC_m$ werden im Schritt 8 wieder einer nach dem anderen gemessen, um die Vermessung der Schallübertragungen $S_{i,j}$ der Paarungen m jeweils akustisch sauber voneinander zu trennen.

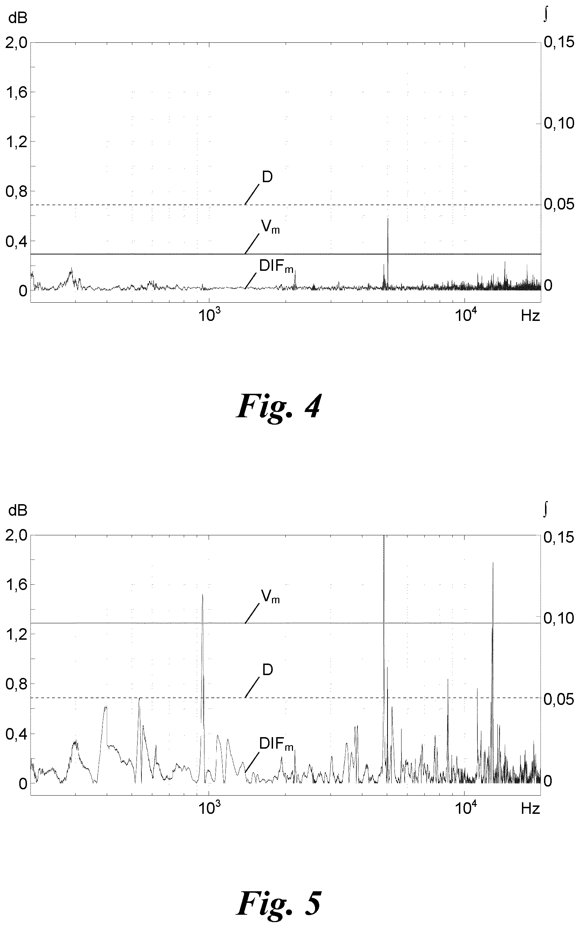

Nach Messung der aktuellen Frequenzgänge $SPEC_m$ wird im Schritt 9 für jede Paarung $m = \Phi(i, j)$ ein Differenz-Frequenzgang $DIF_m$ (Fig. 4, 5) aus der Abweichung des jeweiligen aktuellen Frequenzgangs $SPEC_m$ vom jeweils zugehörigen, d.h. dieselbe Paarung m betreffenden Referenz-Frequenzgang $REF_m$ ermittelt. Jeder Differenz-Frequenzgang $DIF_m$ kann beispielsweise eine einfache (frequenzweise) Differenz (Subtraktion) zwischen dem aktuellen Frequenzgang $SPEC_m$ und dem Referenz-Frequenzgang $REF_m$ der Paarung m sein oder auch ein anderes Abweichungsmaß, beispielsweise die (frequenzweisen) absoluten oder quadrierten Differenzen od.dgl. zwischen den beiden Kurven $REF_m$ und $SPEC_m$. In einem optionalen Schritt 10 kann jeder Differenz-Frequenzgang $DIF_m$ gewichtet bzw. gefiltert werden, falls gewünscht.

Anschließend wird im Schritt 11 ein globales Maß $V_m$ (Fig. 4, 5) zumindest eines oder jedes Differenz-Frequenzgangs $DIF_m$ berechnet und im Schritt 12 gegen ein Detektionskriterium geprüft, um das Vorliegen einer Störstelle F zu detektieren. Das Maß $V_m$ kann beispielsweise der Maximal-Amplitudenwert des jeweiligen Differenz-Frequenzgangs $DIF_m$ sein, ein Mittelwert dieses Differenz-Frequenzgangs $DIF_m$, nachdem dieser einer Absolutwertbildung (Betragsbildung) unterzogen wurde, oder die gesamte "Signalenergie" $E_m$ des jeweiligen Differenz-Frequenzgangs $DIF_m$. Letztere kann beispielsweise dadurch berechnet werden, dass der Differenz-Frequenzgang $DIF_m$ zuerst einer Absolutwertbildung unterzogen und dann über den gesamten interessierenden Frequenzbereich, z.B. 20 Hz bis 20 KHz, integriert wird.

Die Schritte 8 - 11 werden für jede Paarung $m = \Phi(i, j)$ durchgeführt, siehe Schleife 13. Jeder der Schritte 8 - 11 könnte alternativ auch eine eigene Schleife 13 haben.

Anschließend wird zum Vergleichsschritt 12 übergegangen. Das Vergleichs- und damit Detektionskriterium des Schritts 12 ist erfüllt, wenn beispielsweise zumindest eines der - oder alle - Maße $V_m$ einen Detektionsschwellwert D übersteigt bzw. übersteigen. Es versteht sich, dass im Schritt 12 auch mehrere Maße $V_m$ gemeinsam ausgewertet werden können. Beispielsweise kann eine Summe oder ein Mittelwert aller Maße $V_m$ mit dem Detektionsschwellwert D verglichen werden.

Wenn das Detektionskriterium des Vergleichsschritts 12 nicht erfüllt ist (Zweig "n"), dann wurde keine Störstelle F detektiert und das Verfahren kehrt - gegebenenfalls nach Ablauf einer Wartezeit ΔT im Schritt 14 - in einer Schleife 15 zum ersten Schritt 8 der Schleife 13 für ein erneutes Messen der aktuellen Frequenzgänge $SPEC_m$ zurück. Die Wartezeit ΔT kann beispielsweise ein paar Sekunden oder Minuten betragen, so dass das Gehäuse 2 in der Schleife 15 mit diesen Intervallen periodisch überwacht wird.

Ergibt anderseits der Vergleichsschritt 12, dass das Detektionskriterium erfüllt ist (Zweig "y"), wurde das Vorliegen einer Störquelle F erkannt und es wird zum Lokalisierungsabschnitt 16 - 19 des Verfahrens übergegangen.

Der Detektionsschwellwert D kann empirisch gewählt und optional auch mithilfe einer automatischen Regelung adaptiv nachgeführt werden: Im fehlerfreien Falle, d.h. ohne Störstelle F, kann er beispielsweise so weit reduziert werden, dass bereits kleine Veränderungen am Gehäuse 2, d.h. das Auftreten kleiner Störstellen F, detektiert werden können.

Im Lokalisierungsabschnitt 16 - 19 wird in einem ersten Schritt 16 nun für jede mögliche Kombination (m, n) zweier Paarungen (m, n) ein Korrelationsmaß $R_{m,n}$ zwischen den Differenz-Frequenzgängen $DIF_m$ und $DIF_n$ der Paarungen dieser Kombination (m, n) berechnet. Der Index n bezeichnet dabei jeweils eine andere Paarung aus der Menge $\{m = 1, 2, ..., M\}$ als der Index m, d.h. $n \neq m$. Überdies gilt für symmetrische Korrelationsmaße $V_m$ $R_{m,n} = R_{n,m}$, sodass es für M Paarungen insgesamt $\binom{M}{2}$ mögliche Kombinationen und damit Korrelationsmaße $R_{m,n}$ gibt. Der Schritt 16 wird daher in der Schleife 17 $\binom{M}{2}$ mal durchgeführt, d.h. für alle m, n für die gilt m > n.

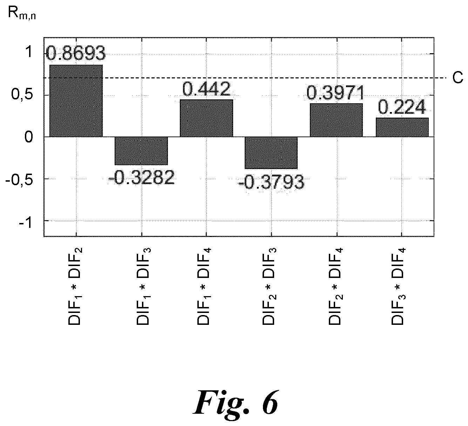

Fig. 6 zeigt für eine Vorrichtung 1 mit zwei Lautsprechern $L_1$, $L_2$ und zwei Mikrophonen $M_1$, $M_2$ und damit M = 4 möglichen Paarungen m bzw. n alle $\binom{4}{2} = 6$ möglichen Kombinationen, für welche jeweils ein Korrelationsmaß $R_{m,n}$ der jeweiligen Differenz-Frequenzgänge $DIF_m$ und $DIF_n$ berechnet wurde, siehe nachstehende Tab. 2:

Tab. 2

| Kombination | (m, n) |
|---|---|
| 1 | (1, 2) |
| 2 | (1, 3) |
| 3 | (1, 4) |
| 4 | (2, 3) |
| 5 | (2, 4) |
| 6 | (3, 4) |

Das Korrelationsmaß $R_{m,n}$ zwischen zwei Differenz-Frequenzgängen $DIF_m$, $DIF_n$ kann auf jegliche in der Technik bekannte Art und Weise berechnet werden, solange es ein Maß für die Abweichung zwischen den beiden Differenz-Frequenzgängen ist, beispielsweise aufsummierte absolute oder quadrierte Differenzen, eine L1-, L2- oder Lp-Norm einer Differenzfunktion $DIF_m$ - $DIF_n$, ein Skalarprodukt aus den Differenz-Frequenzgängen $DIF_m$, $DIF_n$, usw. Im gezeigten Beispiel wird das Korrelationsmaß $R_{m,n}$ aus einer Kreuzkorrelation der beiden jeweils betrachteten Differenz-Frequenzgänge $DIF_m$ und $DIF_n$ ermittelt, insbesondere aus der Kreuzkorrelation

$$R_{m,n}(\tau) = \int_f DIF_m(f) \cdot DIF_n(f + \tau) \, df \qquad (1)$$

für $\tau = 0$, u.zw. entweder über den gesamten Bereich der Frequenz f oder optional in einem ausgewählten Frequenzband. Das ausgewählte Frequenzband ist beispielsweise 250 Hz bis 2 KHz, insbesondere 350 Hz bis 1,1 KHz.

Anschließend wird im Schritt 18 jene Kombination (m, n) ermittelt, welche das höchste Korrelationsmaß $R_{m,n}$ aller Kombinationen hat. In dem Beispiel von Fig. 6 ist dies die erste Kombination (1, 2).

Bisher wurden alle Referenz-Frequenzgänge $REF_m$, aktuellen Frequenzgänge $SPEC_m$ und Differenz-Frequenzgänge $DIF_m$ reellwertig hinsichtlich ihrer Beträge (Amplituden) gemessen und ausgewertet, d.h. ohne Berücksichtigung ihrer Phasen; optional könnten sie jedoch auch komplex gemessen und ausgewertet werden. In diesem Fall kann als Korrelationsmaß $R_{m,n}$ für die Auswertung in Schritt 18 beispielsweise der Betrag der Kreuzkorrelation

$$R_{m,n}(\tau) = \left| \int_f DIF_m^*(f) \cdot DIF_n(f + \tau) \, df \right| \qquad (2)$$

bei $\tau$ = 0 herangezogen werden, wobei * die komplexe Konjugation bezeichnet.

Bei der Suche des höchsten Korrelationsmaßes in Schritt 18 können optional nur jene Korrelationsmaße berücksichtigt werden, die einen Korrelationsschwellwert C (Fig. 6) überschreiten. Der Korrelationsschwellwert C kann empirisch ermittelt werden. Bei entsprechender Normierung des Korrelationsmaßes $R_{m,n}$ auf den Bereich -1 ... +1 (siehe Fig. 6) liegt der Korrelationsschwellwert C beispielsweise im Bereich von 0,5 bis 1, insbesondere bei etwa 0,75.

In anschließenden Vergleichsschritten 19 und 20 werden nun die Lautsprecher- und Mikrophon-Indizes i, j jener zwei Paarungen m, n untersucht, die die in Schritt 18 ermittelte Kombination (m, n) bilden.

Dazu wird im ersten Vergleichsschritt 19 untersucht, ob in den beiden Paarungen m, n der in Schritt 18 ermittelten Kombination jeweils derselbe Lautsprecher-Index i vorkommt, und im zweiten Vergleichsschritt 20, ob in diesen beiden Paarungen m, n jeweils derselbe Mikrophon-Index j vorkommt. Wenn der Vergleichsschritt 19 "ja" ergibt (Zweig "y"), dann wird die Störstelle F als in der Nachbarschaft des Lautsprechers $L_i$ lokalisiert, und wenn der Vergleichsschritt 20 "ja" ergibt (Zweig "y"), dann wird die Störstelle F als in der Nachbarschaft des Mikrophons $M_j$ lokalisiert. Es versteht sich, dass die Reihenfolge der Vergleichsschritte 19 und 20 beliebig ist. Unter "Nachbarschaft" des Lautsprechers $L_i$ bzw. Mikrophons $M_j$ wird dabei verstanden, dass die Störstelle F diesem Lautsprecher $L_i$ bzw. Mikrophon $M_j$ näher ist als jedem anderen Lautsprecher $L_{k\neq i}$ oder Mikrophon $M_{k\#j}$.

Wenn beide Vergleichsschritte 19 und 20 "nein" ergeben (Zweige "n"), dann ist die Lokalisierung uneindeutig und das Verfahren kehrt optional - und gegebenenfalls nach Ablauf der Wartezeit $\Delta T$ in Schritt 14 - zum ersten Schritt 8 der Schleife 13 zurück.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Verfahren zum Detektieren und Lokalisieren einer Störstelle (F) eines Gehäuses (2), insbesondere für ein elektronisches Gerät, umfassend:

    Anordnen von zumindest zwei Lautsprechern ($L_i$) und zumindest zwei Mikrophonen ($M_j$) im Innenraum des Gehäuses (2);

    **gekennzeichnet durch**:

    für jede mögliche Paarung (m) aus Lautsprecher ($L_i$) und Mikrophon ($M_j$): Messen eines Referenz-Frequenzgangs ($REF_m$) der Schallübertragung ($S_{i,j}$) vom Lautsprecher ($L_i$) zum Mikrophon ($M_j$) dieser Paarung (m);

    zu einem späteren Zeitpunkt, für jede Paarung (m) : Messen eines aktuellen Frequenzgangs ($SPEC_m$) der Schallübertragung ($S_{i,j}$) vom Lautsprecher ($L_i$) zum Mikrophon ($M_j$) dieser Paarung (m) ;

    für jede Paarung (m): Ermitteln eines Differenz-Frequenzgangs ($DIF_m$) als Differenz zwischen dem aktuellen Frequenzgang ($SPEC_m$) dieser Paarung (m) und dem Referenz-Frequenzgang ($REF_m$) dieser Paarung (m);

    für zumindest eine Paarung (m): Ermitteln eines Detektionsmaßes ($V_m$) des Differenz-Frequenzgangs ($DIF_m$) dieser Paarung und, wenn dieses zumindest eine Detektionsmaß ($V_m$) ein vorgegebenes Detektionskriterium erfüllt:

    Detektieren einer Störstelle (F),
    für jede mögliche Kombination (m, n) zweier Paarungen: Berechnen eines Korrelationsmaßes ($R_{m,n}$) zwischen den Differenz-Frequenzgängen ($DIF_m$, $DIF_n$) der Paarungen dieser Kombination,
    Ermitteln der Kombination (m, n) mit dem höchsten Korrelationsmaß ($R_{m,n}$) und, wenn in den zwei Paarungen dieser Kombination derselbe Lautsprecher ($L_i$) oder dasselbe Mikrophon ($M_j$) vorkommt, Lokalisieren der Störstelle (F) als diesem Lautsprecher ($L_i$) bzw. Mikrophon ($M_j$) näher als jedem anderen Lautsprecher bzw. Mikrophon.

2. Verfahren nach Anspruch 1, **dadurch gekennzeichnet, dass** das Korrelationsmaß ($R_{m,n}$) aus einer Kreuzkorrelation der Differenz-Frequenzgänge ($DIF_m$, $DIF_n$) in einem ausgewählten Frequenzband ermittelt wird.

3. Verfahren nach Anspruch 2, **dadurch gekennzeichnet, dass** das Frequenzband 250 Hz bis 2 kHz ist, bevorzugt 350 Hz bis 1,1 kHz.

4. Verfahren nach einem der Ansprüche 1 bis 3, **dadurch gekennzeichnet**, beim Ermitteln der Kombination (m, n) mit dem höchsten Korrelationsmaß ($R_{m,n}$) nur jene Kombinationen berücksichtigt werden, die einen Korrelationsschwellwert (C) überschreiten.

5. Verfahren nach einem der Ansprüche 1 bis 4, **dadurch gekennzeichnet, dass** das Detektionskriterium erfüllt ist, wenn die gesamte Signalenergie zumindest eines Differenz-Frequenzgangs ($DIF_m$) einen Detektionsschwellwert (D) übersteigt.

6. Verfahren nach einem der Ansprüche 1 bis 5, **dadurch gekennzeichnet, dass** der jeweilige Frequenzgang ($DEF_m$, $SPEC_m$) mittels von den Lautsprechern ($L_i$) ausgestrahlter Chirps gemessen wird.

7. Verfahren nach einem der Ansprüche 1 bis 6, **dadurch gekennzeichnet, dass** der jeweilige Frequenzgang ($DEF_m$, $SPEC_m$) mittels von den Lautsprechern ($L_i$) ausgestrahlter Dirac-Impulse gemessen wird.

8. Verfahren nach einem der Ansprüche 1 bis 7, **dadurch gekennzeichnet, dass** die Referenz-Frequenzgänge ($REF_m$) und aktuellen Frequenzgänge ($SPEC_m$) jeweils über mehrere Einzelmessungen gemittelt werden.

9. Vorrichtung zum Lokalisieren einer Störstelle (F) eines Gehäuses (2), insbesondere für ein elektronisches Gerät, umfassend:

    zumindest zwei Lautsprecher ($L_i$) und zumindest zwei Mikrophone ($M_j$) zur Anordnung im Innenraum (3) des Gehäuses (2); und
    einen an die Lautsprecher ($L_i$) angeschlossenen Signalgenerator (5) und eine an die Mikrophone ($M_j$) angeschlossene Auswerteschaltung (6);
    **dadurch gekennzeichnet, dass** die Auswerteschaltung (6) dafür ausgebildet ist,
    für jede mögliche Paarung (m) aus Lautsprecher ($L_i$) und Mikrophon ($M_j$) einen Referenz-Frequenzgang ($REF_m$) der Schallübertragung ($S_{i,j}$) vom Lautsprecher ($L_i$) zum Mikrophon ($M_j$) dieser Paarung (m) zu messen,
    zu einem späteren Zeitpunkt, für jede Paarung (m): einen aktuellen Frequenzgang ($SPEC_m$) der Schallübertragung ($S_{i,j}$) vom Lautsprecher ($L_i$) zum Mikrophon ($M_j$) dieser Paarung (m) zu messen,
    für jede Paarung (m): einen Differenz-Frequenzgang ($DIF_m$) als Differenz zwischen dem aktuellen Frequenzgang ($SPEC_m$) dieser Paarung und dem Referenz-Frequenzgang ($REF_m$) dieser Paarung zu ermitteln,
    für zumindest eine Paarung (m): ein Detektionsmaß ($V_m$) des Differenz-Frequenzgangs ($DIF_m$) dieser Paarung zu ermitteln und, wenn dieses zumindest eine Detektionsmaß ($V_m$) ein vorgegebenes Detektionskriterium erfüllt:

    eine Störstelle (F) zu detektieren und
    für jede mögliche Kombination (m, n) zweier Paarungen: ein Korrelationsmaß ($R_{m,n}$) zwischen den Differenz-Frequenzgängen ($DIF_m$, $DIF_n$) dieser Kombination zu berechnen, und dann
    die Kombination (m, n) mit dem höchsten Korrelationsmaß ($R_{m,n}$) zu ermitteln und, wenn in den zwei Paarungen (m, n) dieser Kombination derselbe Lautsprecher ($L_i$) oder dasselbe Mikrophon ($M_j$) vorkommt, die Störstelle (F) als diesem Lautsprecher ($L_i$) bzw. Mikrophon ($M_j$) näher als jedem anderen Lautsprecher bzw. Mikrophon zu lokalisieren.

10. Vorrichtung nach Anspruch 9, **dadurch gekennzeichnet, dass** das Korrelationsmaß ($R_{m,n}$) aus einer Kreuzkorrelation der Differenz-Frequenzgänge ($DIF_m$, $DIF_n$) in einem ausgewählten Frequenzband ermittelt ist.

11. Vorrichtung nach Anspruch 10, **dadurch gekennzeichnet, dass** das Frequenzband 250 Hz bis 2 kHz ist, bevorzugt 350 Hz bis 1,1 kHz.

12. Vorrichtung nach einem der Ansprüche 9 bis 11, **dadurch gekennzeichnet, dass** der Signalgenerator (5) für jeden Lautsprecher ($L_i$) Chirps erzeugt.

13. Vorrichtung nach einem der Ansprüche 9 bis 11, **dadurch gekennzeichnet, dass** der Signalgenerator (5) für jeden Lautsprecher ($L_i$) Dirac-Impulse erzeugt.

14. Vorrichtung nach einem der Ansprüche 9 bis 13, **dadurch gekennzeichnet, dass** die Referenz-Frequenzgänge ($REF_m$) und aktuellen Frequenzgänge ($SPEC_m$) jeweils über mehrere Einzelmessungen gemittelt werden.

**Claims**

1. A method for detecting and locating a defect (F) in a housing (2), in particular for an electronic device, comprising:

   arranging of at least two loudspeakers ($L_i$) and at least two microphones ($M_j$) in the interior space of the housing (2);
   **characterized by**:

   for each possible pairing (m) of a loudspeaker ($L_i$) and a microphone ($M_j$): measuring a reference frequency response ($REF_m$) of the sound transmission ($S_{i,j}$) from the loudspeaker ($L_i$) to the microphone ($M_j$) of that pairing (m) ;
   at a later time, for each pairing (m): measuring a current frequency response ($SPEC_m$) of the sound transmission ($S_{i,j}$) from the loudspeaker ($L_i$) to the microphone ($M_j$) of that pairing (m) ;
   for each pairing (m): determining a frequency response difference ($DIF_m$) as the difference between the current frequency response ($SPEC_m$) of that pairing (m) and the reference frequency response ($REF_m$) of that pairing (m);
   for at least one pairing (m): determining a detection measure ($V_m$) of the frequency response difference ($DIF_m$) of that pairing and, when this at least one detection measure ($V_m$) meets a predefined detection criterion:

      detecting a defect (F),
      for each possible combination (m, n) of two pairings:

   calculating a correlation measure ($R_{m,n}$) between the frequency response differences ($DIF_m$, $DIF_n$) of the pairings of that combination,
   determining the combination (m, n) with the highest correlation measure ($R_{m,n}$), and, when the same loudspeaker ($L_i$) or the same microphone ($M_j$) is present in the two pairings of this combination, locating the defect (F) as being closer to this loudspeaker ($L_i$) or microphone ($M_j$), than to any other loudspeaker or microphone, respectively.

2. The method according to claim 1, **characterized in that** the correlation measure ($R_{m,n}$) is determined from a cross-correlation of the frequency response differences ($DIF_m$, $DIF_n$) within a selected frequency band.

3. The method according to claim 2, **characterized in that** the frequency band ranges from 250 Hz to 2 kHz, preferably from 350 Hz to 1.1 kHz.

4. The method according to any one of claims 1 to 3, **characterized in that**, when determining the combination (m, n) with the highest correlation measure ($R_{m,n}$), only those combinations are considered that exceed a correlation threshold value (C) .

5. The method according to any one of claims 1 to 4, **characterized in that** the detection criterion is met when the total signal energy of at least one frequency response difference ($DIF_m$) exceeds a detection threshold value (D).

6. The method according to any one of claims 1 to 5, **characterized in that** the respective frequency response ($DEF_m$, $SPEC_m$) is measured using chirps emitted by the loudspeakers ($L_i$).

7. The method according to any one of claims 1 to 6, **characterized in that** the respective frequency response ($DEF_m$, $SPEC_m$) is measured using Dirac pulses emitted by the loudspeakers ($L_i$).

8. The method according to any one of claims 1 to 7, **characterized in that** the reference frequency responses ($REF_m$) and the current frequency responses ($SPEC_m$) are respectively averaged over several individual measurements.

9. A device for locating a defect (F) in a housing (2), in particular for an electronic device, comprising:

   at least two loudspeakers ($L_i$) and at least two microphones ($M_j$) arranged in the interior space (3) of the housing (2); and
   a signal generator (5) connected to the loudspeakers ($L_i$) and an evaluation circuit (6) connected to the microphones ($M_j$) ;

**characterized in that** the evaluation circuit (6) is configured to:

measure, for each possible pairing (m) of a loudspeaker ($L_i$) and a microphone ($M_j$), a reference frequency response ($REF_m$) of the sound transmission ($S_{i,j}$) from the loudspeaker ($L_i$) to the microphone ($M_j$) of that pairing (m),

at a later time, for each pairing (m) : measure a current frequency response ($SPEC_m$) of the sound transmission ($S_{i,j}$) from the loudspeaker ($L_i$) to the microphone ($M_j$) of that pairing (m),

for each pairing (m) : determine a frequency response difference ($DIF_m$) as the difference between the current frequency response ($SPEC_m$) of that pairing and the reference frequency response ($REF_m$) of that pairing,

for at least one pairing (m): determine a detection measure ($V_m$) of the frequency response difference ($DIF_m$) of that pairing and, when this at least one detection measure ($V_m$) meets a predefined detection criterion:

detect a defect (F), and

for each possible combination (m, n) of two pairings: calculate a correlation measure ($R_{m,n}$) between the frequency response differences ($DIF_m$, $DIF_n$) of that combination, and then

determine the combination (m, n) with the highest correlation measure ($R_{m,n}$), and, when the same loudspeaker ($L_i$) or the same microphone ($M_j$) are present in the two pairings (m, n) of this combination, locate the defect (F) as being closer to this loudspeaker ($L_i$) or microphone ($M_j$), than to any other loudspeaker or microphone, respectively.

10. The device according to claim 9, **characterized in that** the correlation measure ($R_{m,n}$) is determined from a cross-correlation of the frequency response differences ($DIF_m$, $DIF_n$) within a selected frequency band.

11. The device according to claim 10, **characterized in that** the frequency band ranges from 250 Hz to 2 kHz, preferably from 350 Hz to 1.1 kHz.

12. The device according to any one of claims 9 to 11, **characterized in that** the signal generator (5) generates chirps for each loudspeaker ($L_i$).

13. The device according to any one of claims 9 to 11, **characterized in that** the signal generator (5) generates Dirac pulses for each loudspeaker ($L_i$).

14. The device according to any one of claims 9 to 13, **characterized in that** the reference frequency responses ($REF_m$) and the current frequency responses ($SPEC_m$) are respectively averaged over several individual measurements.

**Revendications**

1. Procédé de détection et de localisation d'un point de défaillance (F) d'un boitier (2), destiné notamment à un appareil électronique, comprenant :

la disposition d'au moins deux haut-parleurs ($L_i$) et d'au moins deux microphones ($M_j$) dans l'espace intérieur du boitier (2) ;
**caractérisé par** :

pour chaque appariement (m) possible d'un haut-parleur ($L_i$) et d'un microphone ($M_j$) : la mesure d'une réponse en fréquence de référence ($REF_m$) de la transmission sonore ($S_{i,j}$) du haut-parleur ($L_i$) vers le microphone ($M_j$) de cet appariement (m) ;

à un instant plus tard, pour chaque appariement (m) : la mesure d'une réponse en fréquence actuelle ($SPEC_m$) de la transmission sonore ($S_{i,j}$) du haut-parleur ($L_i$) vers le microphone ($M_j$) de cet appariement (m) ;

pour chaque appariement (m) : la détermination d'une réponse en fréquence de différence ($DIF_m$) sous forme de différence entre la réponse en fréquence actuelle ($SPEC_m$) de cet appariement (m) et la réponse en fréquence de référence ($REF_m$) de cet appariement (m) ;

pour au moins un appariement (m) : la détermination d'une mesure de détection ($V_m$) de la réponse en fréquence de différence ($DIF_m$) de cet appariement et, lorsque cette au moins une mesure de détection ($V_m$) satisfait un critère de détection prédéfini :

la détection d'un point de défaillance (F),

pour chaque combinaison (m, n) possible de deux appariements : le calcul d'une mesure de corrélation ($R_{m,n}$) entre les réponses en fréquence de différence ($DIF_m$, $DIF_n$) des appariements de cette combinaison,

la détermination de la combinaison (m, n) avec la mesure de corrélation ($R_{m,n}$) la plus élevée, et, lorsque le même haut-parleur ($L_i$) ou le même microphone ($M_j$) se présentent dans les deux appariements de cette combinaison, la localisation du point de défaillance (F) comme étant plus proche de ce haut-parleur ($L_i$), respectivement, microphone ($M_j$), par rapport à chaque autre haut-parleur, respectivement, microphone.

2. Procédé selon la revendication 1, **caractérisé en ce que** la mesure de corrélation ($R_{m,n}$) est déterminée à partir d'une corrélation croisée des réponses en fréquence de différence ($DIF_m$, $DIF_n$) dans une bande de fréquence sélectionnée.

3. Procédé selon la revendication 2, **caractérisé en ce que** la bande de fréquence va de 250 Hz à 2 kHz, de préférence de 350 Hz à 1,1 kHz.

4. Procédé selon l'une des revendications 1 à 3, **caractérisé en ce que**, lors de la détermination de la combinaison (m, n) avec la mesure de corrélation ($R_{m,n}$) la plus élevée, on ne tient compte que des combinaisons qui dépassent une valeur de seuil de corrélation (C).

5. Procédé selon l'une des revendications 1 à 4, **caractérisé en ce que** le critère de détection est satisfait lorsque l'énergie de signal totale d'au moins une réponse en fréquence de différence ($DIF_m$) dépasse une valeur de seuil de détection (D).

6. Procédé selon l'une des revendications 1 à 5, **caractérisé en ce que** la réponse en fréquence ($DEF_m$, $SPEC_m$) respective est mesurée au moyen de chirps émis par les haut-parleurs ($L_i$).

7. Procédé selon l'une des revendications 1 à 6, **caractérisé en ce que** la réponse en fréquence ($DEF_m$, $SPEC_m$) respective est mesurée par des impulsions de Dirac émises par les haut-parleurs ($L_i$).

8. Procédé selon l'une des revendications 1 à 7, **caractérisé en ce que** les réponses en fréquence de référence ($REF_m$) et les réponses en fréquence actuelles ($SPEC_m$) sont respectivement moyennées sur plusieurs mesures individuelles.

9. Dispositif de localisation d'un point de défaillance (F) d'un boitier (2), destiné notamment à un appareil électronique, comprenant :

au moins deux haut-parleurs ($L_i$) et au moins deux microphones ($M_j$) prévus pour la disposition dans l'espace intérieur (3) du boitier (2) ; et

un générateur de signaux (5) connecté aux haut-parleurs ($L_i$) et un circuit d'évaluation (6) connecté aux microphones ($M_j$) ;

**caractérisé en ce que** le circuit d'évaluation (6) est conçu pour,

pour chaque appariement (m) possible à base d'un haut-parleur ($L_i$) et d'un microphone ($M_j$), mesurer une réponse en fréquence de référence ($REF_m$) de la transmission sonore ($S_{i,j}$) du haut-parleur ($L_i$) vers le microphone ($M_j$) de cet appariement (m),

à un instant plus tard, pour chaque appariement (m) : mesurer d'une réponse en fréquence actuelle ($SPEC_m$) de la transmission sonore ($S_{i,j}$) du haut-parleur ($L_i$) vers le microphone ($M_j$) de cet appariement (m),

pour chaque appariement (m) : déterminer une réponse en fréquence de différence ($DIF_m$) sous forme de différence entre la réponse en fréquence actuelle ($SPEC_m$) de cet appariement et la réponse en fréquence de référence ($REF_m$) de cet appariement,

pour au moins un appariement (m) : déterminer une mesure de détection ($V_m$) de la réponse en fréquence de différence ($DIF_m$) de cet appariement et, lorsque cette au moins une mesure de détection ($V_m$) satisfait un critère de détection prédéfini :

détecter un point de défaillance (F), et

pour chaque combinaison (m, n) possible de deux appariements : calculer une mesure de corrélation ($R_{m,n}$) entre les réponses en fréquence de différence ($DIF_m$, $DIF_n$) de cette combinaison,

et ensuite

déterminer la combinaison (m, n) avec la mesure de corrélation ($R_{m,n}$) la plus élevée, et, lorsque le même haut-parleur ($L_i$) ou le même microphone ($M_j$) se présente dans les deux appariements (m, n) de cette combinaison, localiser le point de défaillance (F) comme étant plus proche de ce haut-parleur ($L_i$), respectivement, microphone ($M_j$), par rapport à chaque autre haut-parleur, respectivement, microphone.

10. Dispositif selon la revendication 9, **caractérisé en ce que** la mesure de corrélation ($R_{m,n}$) est déterminée à partir d'une corrélation croisée des réponses en fréquence de différence ($DIF_m$, $DIF_n$) dans une bande de fréquence sélectionnée.

11. Dispositif selon la revendication 10, **caractérisé en ce que** la bande de fréquence va de 250 Hz à 2 kHz, de préférence de 350 Hz à 1,1 kHz.

12. Dispositif selon l'une des revendications 9 à 11, **caractérisé en ce que** le générateur de signal (5) génère des chirps pour chaque haut-parleur ($L_i$).

13. Dispositif selon l'une des revendications 9 à 11, **caractérisé en ce que** le générateur de signal (5) génère des impulsions de Dirac pour chaque haut-parleur ($L_i$).

14. Dispositif selon l'une des revendications 9 à 13, **caractérisé en ce que** les réponses en fréquence de référence ($REF_m$) et les réponses en fréquence actuelles ($SPEC_m$) sont respectivement moyennées sur plusieurs mesures individuelles.

**Fig. 1**

**Fig. 3**

*Fig. 2*

**Fig. 4**

**Fig. 5**

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170338804 A1